# EUROPÄISCHE PATENTSCHRIFT

(11) **EP 3 854 213 B1**
(45) Veröffentlichungstag und Bekanntmachung des Hinweises auf die Patenterteilung: **07.06.2023**
(21) Anmeldenummer: 20152872.6
(22) Anmeldetag: 21.01.2020
(51) Int. Cl.: A21C 15/00, G01B 5/06

(54) **VORRICHTUNG ZUR MESSUNG DER DICKEN VON DÜNNWANDIGEN, SPRÖDEN WAFFELBLÄTTERN**
DEVICE FOR MEASURING THE THICKNESS OF THIN-WALLED BRITTLE WAFERS
DISPOSITIF DE MESURE DE L'ÉPAISSEUR DES FEUILLES DE GAUFRES CASSANTES DE FAIBLE ÉPAISSEUR

(43) Veröffentlichungstag der Anmeldung: 28.07.2021
(73) Patentinhaber: Bühler Food Equipment GmbH, 2100 Leobendorf (AT)
(72) Erfinder: Lindner, Michael, 1200 Wien (AT); Erger, Lukas, 2170 Poysdorf (AT); Pospichal, Robert, 1140 Wien (AT)
(74) Vertreter: Puchberger & Partner Patentanwälte

(56) Entgegenhaltungen:
- EP-A2- 0 182 563
- DE-C1- 19 627 941
- US-A- 3 476 058
- US-A- 4 232 447
- US-A1- 2012 137 533

## Beschreibung

Die Erfindung betrifft eine Vorrichtung sowie eine Herstellungsanlage gemäß den Merkmalen der unabhängigen Patentansprüche.

Bei der industriellen Herstellung von Waffelformkörpern, insbesondere von Waffelblättern wie Flachwaffelblättern oder Hohlwaffelblättern, sind die Herstellungseffizienz und die Qualität des Endprodukts von großer Wichtigkeit. Es besteht daher am Markt eine Nachfrage nach Herstellungsanlagen, bei denen die Qualität des Endprodukts sowie die Effizienz bei der Herstellung verbessert werden.

Ein wichtiger Parameter hierzu ist die Dicke und im Speziellen die Varianz der Dicke der hergestellten Waffelformkörper. Bei gestapelten Waffelkörpern wie beispielsweise bei mehrlagigen mit Creme gefüllten Schnitten addiert sich durch die Mehrlagigkeit die Dickenabweichung, was bei der Verpackung zu Problemen führen kann. Wird die Teigmenge nicht an die erhöhte Dicke des Produkts angepasst, so führt dies in der Regel zu einer herabgesetzten Qualität, insbesondere zu einem unvollständigen Waffelblatt. Wird die Teigmenge erhöht, so müssen mehr Rohstoffe bei der Produktion eingesetzt werden, was wiederum die Herstellungseffizienz herabsetzt.

Herkömmliche industrielle Backmaschinen zur Herstellung von Waffelformkörpern können bis zu 100 Waffelformkörper pro Minute produzieren. Diese Waffelformkörper werden aus der Backmaschine abtransportiert und in der Regel zu weiteren Verarbeitungsstationen gefördert.

Der Herstellungsprozess erfolgt in der Regel kontinuierlich, das bedeutet, dass die einzelnen Waffelblätter nicht angehalten werden, sondern kontinuierlich fortbewegt werden, wobei sich die Geschwindigkeit über die Förderstrecke ändern kann. Herkömmliche Systeme zur Messung der Dicke von bewegten Körpern sind für Waffelformkörper nicht einsetzbar. So weisen Waffelformkörper eine spröde, poröse und meist mit Rippen versehene Struktur auf. Überdies verlassen die einzelnen Waffelformkörper die Backmaschine mit einer Temperatur von meist über 100° Celsius, was für herkömmliche Messverfahren ebenfalls problematisch ist.

Herkömmliche Vorrichtungen sind unter anderem aus der DE 196 27 941 C1, der US 2012/137533 A1 und der US 4,232,447 A bekannt.

Aufgabe der Erfindung ist es nun, eine Messvorrichtung sowie eine Herstellungsanlage zu bilden, durch die die Qualität der produzierten Waffelformkörper sowie gegebenenfalls auch die Herstellungseffizienz verbessert werden können. Die Aufgabe wird insbesondere durch die Merkmale der unabhängigen Patentansprüche gelöst.

Die Erfindung betrifft eine Vorrichtung zur Messung der Dicken von dünnwandigen, spröden Waffelblättern, die während der Messung einzeln, beabstandet nacheinander und kontinuierlich durch einen Messspalt befördert werden, umfassend:
- einen ersten Waffelblattförderer mit einer Förderfläche, auf der die Waffelblätter zu dem Messspalt transportiert und von dem Messspalt abtransportiert werden, wobei der erste Waffelblattförderer insbesondere als Riemenförderer ausgebildet ist,
- einen zur Dickenmessung beweglich angeordneten Messfühler, wobei der Messfühler eine Seite des Messspalts bildet oder begrenzt, wobei der Messfühler eine erste Einlaufschräge aufweist und wobei der Messfühler einen um eine Schwenkachse schwenkbar gelagerten Schwenkarm und einen zur Erfassung der Bewegung des Schwenkarms eingerichteten Sensor aufweist,
- einen während der Messung starr angeordneten Gegenhalter, wobei der Gegenhalter die andere Seite des Messspalts bildet, wobei der Gegenhalter eine zweite Einlaufschräge aufweist,
- und einen zweiten Waffelblattförderer, der das Waffelblatt entlang einer Förderrichtung durch den Messspalt befördert.

Gegebenenfalls ist vorgesehen, dass der Gegenhalter zur Einstellung des Messspaltes, und insbesondere zur Einstellung der Null-Stellung des Messfühlers, verstellbar und für die Messung feststellbar ist.

Gegebenenfalls ist vorgesehen, dass der Gegenhalter auf einem um eine Gegenhalterdrehachse dreh- und/oder schwenkbar gelagerten Gegenhalterträger sitzt, und dass die Außenkontur des Gegenhalters exzentrisch bzw. nockenförmig ausgebildet ist, sodass eine Verschwenkung des Gegenhalterträgers eine Verstellung des Gegenhalters und des Messspaltes bewirkt.

Gegebenenfalls ist vorgesehen, dass der Sensor ein Wegsensor, insbesondere ein pneumatischer Wegsensor ist, der entfernt von der Schwenkachse mit dem Schwenkarm gekoppelt ist, um eine Bewegung des Schwenkarms und damit die Dicken der Waffelblätter zu erfassen. Alternativ kann auch ein Winkelsensor eingesetzt werden, der die Verschwenkung des Schwenkarms detektiert.

Gegebenenfalls ist vorgesehen, dass ein Dämpfer zur Dämpfung von Schwingungen des Schwenkarms vorgesehen ist, wobei der Dämpfer bevorzugt ein linearer Dämpfer, ein Rotationsdämpfer oder ein Torsionsdämpfer ist. Bevorzugt ist der Dämpfer ein hydraulischer, linearer Dämpfer, der zumindest ab einer bestimmten Schwenkstellung des Schwenkarms entfernt von der Schwenkachse mit dem Schwenkarm gekoppelt ist.

In einer bevorzugt Ausführungsform ist der Dämpfer derart angeordnet oder ausgestaltet, dass der Schwenkarm anfänglich frei, ohne Dämpfung, schwingen kann und erst ab einem bestimmten Ausschlag des Schwenkarms mit dem Dämpfer in Wirkkontakt tritt, um dessen Bewegung zu dämpfen. Insbesondere kann der Dämpfer derart angeordnet sein, dass eine Dämpfung der Bewegung erst ab einer fortgeschrittenen oder übermäßigen Schwenkstellung des Schwenkarms erfolgt.

Hierdurch kann ein Überschwingen des Schwenkarms verhindert werden, ohne die Messung zu beeinträchtigen.

Gegebenenfalls ist vorgesehen, dass der Schwenkarm entlang der Förderrichtung verläuft und insbesondere als Schlepphebel ausgebildet ist.

Gegebenenfalls ist vorgesehen, dass der zweite Waffelblattförderer auf jener Seite des Messspalts angeordnet ist, auf der auch der Messfühler angeordnet ist, und dass der Gegenhalter als Widerlager bzw. Gegenhalter für die Andrückkraft des zweiten Waffelblattförderers an dem jeweiligen Waffelblatt wirkt.

Gegebenenfalls ist vorgesehen, dass der zweite Waffelblattförderer eine erste Förderwalze umfasst, die zur Förderung der Waffelblätter drehbar angetrieben ist.

Gegebenenfalls ist vorgesehen, dass der zweite Waffelblattförderer eine zweite Förderwalze umfasst, die zur Förderung der Waffelblätter drehbar angetrieben ist.

Gegebenenfalls ist vorgesehen, dass die erste Förderwalze und die zweite Förderwalze entlang der Förderrichtung nacheinander angeordnet sind.

Gegebenenfalls ist vorgesehen, dass die Förderwalzen des zweiten Waffelblattförderers, z.B. über mindestens einen Riemen, miteinander gekoppelt sind.

Gegebenenfalls ist vorgesehen, dass die erste Förderwalze entlang der Förderrichtung vor dem Gegenhalter und die zweite Förderwalze entlang der Förderrichtung nach dem Gegenhalter angeordnet sind.

Gegebenenfalls ist vorgesehen, dass die Lage des zweiten Waffelblattförderers, insbesondere die Lage der ersten Förderwalze und/oder der zweiten Förderwalze gegenüber dem ersten Waffelblattförderer und/oder gegenüber dem Gegenhalter zur Anpassung an die Dicke der zu fördernden Waffelblätter verstellbar ist.

Gegebenenfalls ist vorgesehen, dass der zweite Waffelblattförderer mindestens ein Antriebsrad umfasst, das zum Antrieb des zweiten Waffelblattförderers mit dem Antrieb des ersten Waffelblattförderers gekoppelt ist, wobei das Antriebsrad bevorzugt an der bewegten Förderfläche des ersten Waffelblattförderers, insbesondere an einem Riemen des ersten Waffelblattförderers, abrollt.

Gegebenenfalls ist vorgesehen, dass das mindestens eine Antriebsrad des zweiten Waffelblattförderers mehrere Abschnitte mit unterschiedlichen Durchmessern umfasst, die zusammen eine Stufenscheibe bilden,

Gegebenenfalls ist vorgesehen, dass die Lage des zweiten Waffelblattförderers, insbesondere die Lage der ersten Förderwalze und/oder der zweiten Förderwalze gegenüber dem ersten Waffelblattförderer durch Wahl des mit dem ersten Waffelblattförderer in Kontakt stehenden Abschnitts des Antriebrads bestimmt ist.

Gegebenenfalls ist vorgesehen, dass jener Riemen des ersten Waffelblattförderers, auf dem das Antriebsrad abrollt, höhenverstellbar ausgebildet ist, wobei die Lage des zweiten Waffelblattförderers, insbesondere die Lage der ersten Förderwalze und/oder der zweiten Förderwalze gegenüber der Förderfläche durch Wahl der Lage des höhenverstellbaren Riemens bestimmt ist.

Gegebenenfalls ist vorgesehen, dass nebeneinander, also quer zur Förderrichtung, mehrere Messfühler und mehrere Gegenhalter vorgesehen sind.

Gegebenenfalls ist vorgesehen, dass nebeneinander mehrere Förderwalzen, insbesondere mehrere erste Förderwalzen und mehrere zweite Förderwalzen vorgesehen sind.

Die Erfindung betrifft insbesondere auch eine Herstellungsanlage zur Herstellung von dünnwandigen, spröden Waffelblättern, mit einer Waffelbackmaschine und einer der Waffelbackmaschine nachgeordneten erfindungsgemäßen Messvorrichtung.

Gegebenenfalls ist vorgesehen, dass im Regelbetrieb alle in der Waffelbackmaschine hergestellten Waffelblätter der Messvorrichtung zugeführt werden und insbesondere durch den Messspalt gefördert werden.

Die Vorrichtung zur Messung der Dicken von dünnwandigen, spröden Waffelblättern umfasst einen Messspalt, der auf einer Seite von einem Messfühler begrenzt wird. Auf der anderen Seite ist der Messspalt durch einen Gegenhalter begrenzt. Der Gegenhalter ist während der Messung starr angeordnet und dient insbesondere als Referenzfläche für die Messung. Der Messfühler ist bewegbar angeordnet und tastet somit die äußere Kontur und damit die Dicke des Waffelblattes ab. Die Bewegung des Messfühlers bzw. dessen Lage wird durch einen Sensor detektiert. Die Ausgangssignale dieses Sensors sind dazu geeignet, die Dicke des Waffelformkörpers zu errechnen oder zu erfassen.

Bei der Messung wird das Waffelblatt entlang der Förderrichtung durch den Messspalt bewegt, wobei eine Reibkraft überwunden werden muss, die dadurch entsteht, dass das Waffelblatt zur Messung zwischen dem Messfühler und dem Gegenhalter eingeklemmt wird. Zur Förderung der Waffelblätter ist mindestens ein Waffelblattförderer vorgesehen. Insbesondere sind ein erster Waffelblattförderer und ein zweiter Waffelblattförderer vorgesehen. Der erste Waffelblattförderer ist dazu geeignet und/oder eingerichtet, die Waffelformkörper zu dem Messspalt zu transportieren und die Waffelblätter von dem Messspalt abzutransportieren. Der zweite Waffelblattförderer ist insbesondere dazu geeignet und/oder eingerichtet, die Waffelformkörper durch den Messspalt zu transportieren.

Für die Messung ist es vorteilhaft, wenn die Waffelformkörper während der Förderung gegen den Gegenhalter gepresst werden oder zumindest an diesem anliegen, sodass dieser als Referenzfläche wirken kann. Die Kraft, durch die der Waffelformkörper an den Gegenhalter angelegt wird, kann einerseits von dem Messfühler ausgehen, der beispielsweise von der anderen Seite des Messspalts auf den jeweiligen Waffelformkörper drückt. Zusätzlich oder alternativ kann die Kraft zur Anlage der Waffelformkörper an den Gegenhalter auch von einer Komponente des zweiten Waffelblattförderers ausgehen. Hierbei drückt der zweite Waffelblattförderer mit einer Komponente, beispielsweise mit einer Förderwalze, auf einer Seite auf das Waffelblatt. Dadurch wird das Waffelblatt mit seiner anderen Seite an den Gegenhalter gedrückt.

In allen Ausführungsbeispielen ist der Gegenhalter während der Messung starr bzw. unbewegt angeordnet. Insbesondere kann der Gegenhalter als feststehendes, nicht drehendes Element ausgebildet sein.

In der Regel werden die Waffelformkörper einzeln und beabstandet voneinander durch den Messspalt befördert. Im Bereich der vorderen und hinteren Kante jedes Waffelformkörpers kommt es in der Regel zu einer dynamischen Bewegung des Messfühlers. Um die Dynamik und insbesondere ein Überschwingen zu reduzieren, kann der Messfühler bzw. die Vorrichtung einen Dämpfer umfassen. Dieser kann beispielsweise als hydraulischer Dämpfer ausgebildet sein.

Bevorzugt ist vorgesehen, dass der Gegenhalter die Förderfläche des ersten Waffelblattförderers überragt oder bündig mit diesem angeordnet ist. Dadurch kann sichergestellt werden, dass das Waffelblatt bei Messung mit einer Seite an dem Gegenhalter anliegt und dieser als Referenzfläche wirken kann.

Gegebenenfalls kann der Gegenhalter jedoch auch geringfügig unterhalb der Förderfläche des ersten Waffelblattförderers angeordnet sein. Dies ist insbesondere dann möglich, wenn die Förderfläche elastisch verformbar ausgebildet ist und der auf das Waffelblatt bzw. auf den Waffelformkörper wirkende Druck ausreicht, um die Förderfläche soweit durchzubiegen, dass der Waffelformkörper bei der Messung dennoch an dem als Referenzfläche wirkenden Gegenhalter anliegt.

Der Messfühler umfasst eine Einlaufschräge. Diese Einlaufschräge ist dazu geeignet oder eingerichtet, das Eintreten des Waffelblatts in den Messspalt zu erleichtern und insbesondere die von dem Messfühler auf die Vorderkante des Waffelformkörpers wirkende Kraft zu minimieren.

Auch der Gegenhalter weist eine Einlaufschräge auf, die dazu geeignet oder eingerichtet ist, das Eintreten des Waffelblatts in den Messspalt zu erleichtern.

Gemäß einer bevorzugten Ausführungsform sind die Einlaufschrägen Abrundungen, die dadurch gebildet werden, dass sowohl der Gegenhalter als auch der Messfühler im Bereich des Messspalts abgerundet ausgebildet sind. Die Rundung hat beispielsweise einen Radius von mehr als 1 cm, bevorzugt mehr als 3 cm.

Der zweite Waffelblattförderer umfasst bevorzugt mindestens eine Förderwalze. Bevorzugt sind zwei Förderwalzen vorgesehen. Bevorzugt weist die Förderwalze (N) eine weiche, elastisch verformbare Außenseite auf, durch die die Förderwalze mit dem Waffelformkörper in Kontakt treten kann, ohne diesen dabei zu beschädigen.

Gegebenenfalls ist vorgesehen, dass bei der Verstellung des Messspalts die Höhe des Messspalts eingestellt werden kann. Dadurch kann die Vorrichtung an unterschiedliche Waffelblattdicken angepasst werden. Beispielsweise kann der Messspalt zu Messung von Waffelblattdicken von 1mm bis zu 10mm, bevorzugt von 2mm bis 5mm eingestellt werden. Die Messgenauigkeit kann dabei in einem Bereich von 0,1mm liegen.

In weiterer Folge wird die Erfindung anhand der Figuren weiter beschrieben.

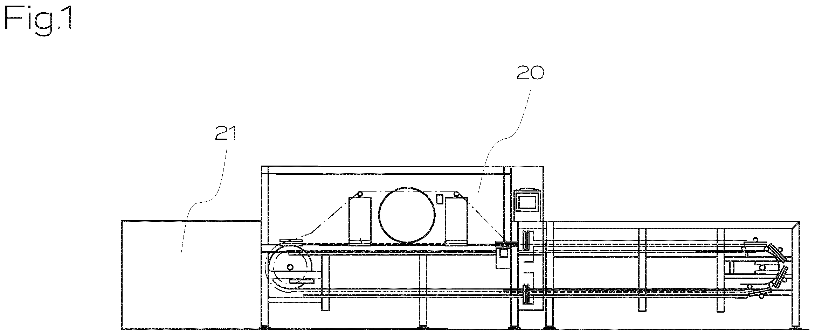

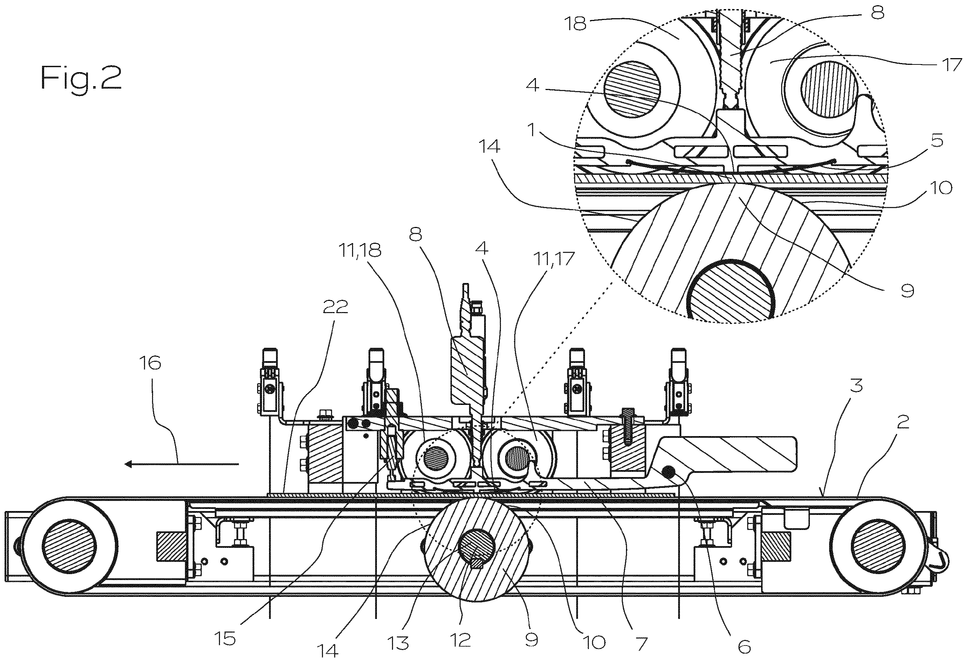

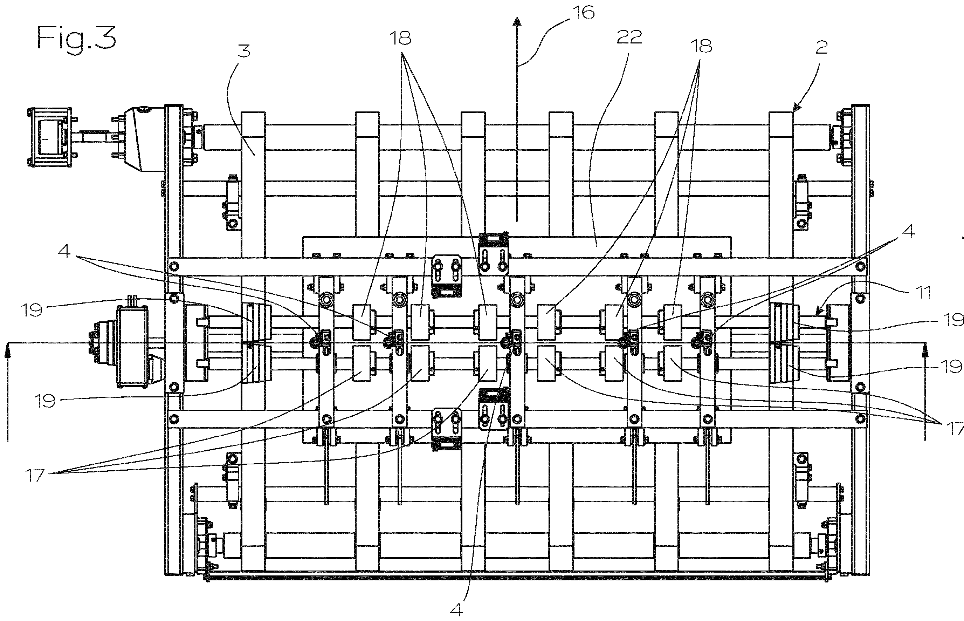

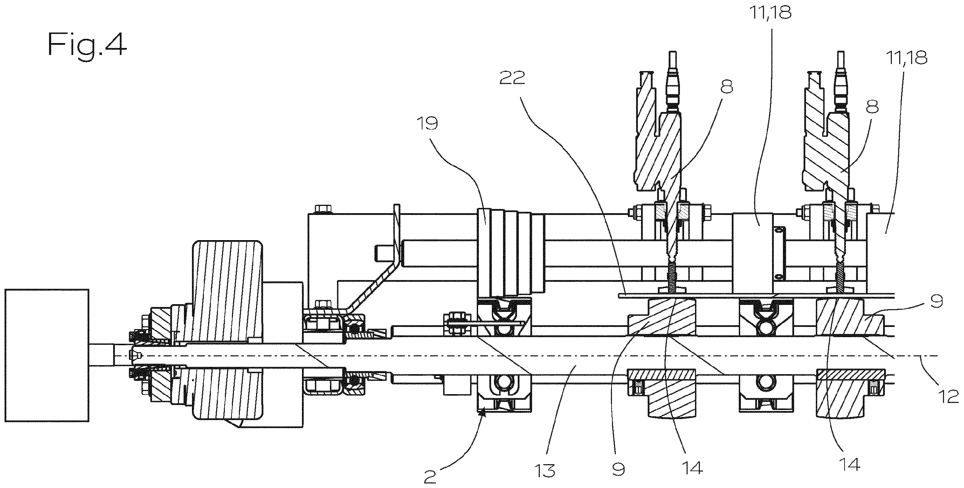

Figur 1 zeigt eine schematische Seitenansicht einer Herstellungsanlage. Figur 2 zeigt eine Schnittdarstellung sowie ein Detail der Messvorrichtung. Figur 3 zeigt eine Aufsicht auf eine Ausführungsform einer Messvorrichtung und Figur 4 zeigt eine weitere Schnittdarstellung.

Wenn nicht anders angegeben, so entsprechen die Bezugszeichen folgenden Komponenten:
Messspalt 1, erster Waffelblattförderer 2, Förderfläche 3, Messfühler 4, erste Einlaufschräge (des Messfühlers) 5, Schwenkachse (des Schwenkarms) 6, Schwenkarm 7, Sensor 8, Gegenhalter 9, zweite Einlaufschräge 10, zweiter Waffelblattförderer 11, Gegenhalterdrehachse 12, Gegenhalterträger 13, Außenkontur (des Gegenhalters) 14, Dämpfer 15, Förderrichtung 16, erste Förderwalze 17, zweite Förderwalze 18, Antriebsrad (des zweiten Waffelblattförderers) 19, Waffelbackmaschine 20, Messvorrichtung 21, Waffelblatt 22.

**Figur** 1 zeigt eine schematische Darstellung einer Herstellungsanlage die eine Waffelbackmaschine 20 und eine Messvorrichtung 21 umfasst.

Die Waffelbackmaschine 20 kann als herkömmliche Waffelbackmaschine zur industriellen Herstellung von Waffelblättern, insbesondere von Flachwaffelblättern ausgebildet sein. In einer derartigen Waffelbackmaschine 20 werden Waffeln in einem kontinuierlichen Prozess hergestellt. Hierfür können mehrere auf- und zuklappbare Backzangen vorgesehen sein, die sich entlang eines Endlosförderers von einer Aufgabestation zur Aufgabe des Teigs, durch einen beheizten Backraum und wieder zurück zu einer Entnahmestation zur Entnahme der gebackenen Waffelblätter bewegen. Bei der Entnahme der Waffelblätter, die auf unterschiedliche Arten erfolgen kann, werden die Waffelblätter über einen Waffelblattförderer aus der Waffelbackmaschine 20 befördert und in weiterer Folge meist weiterverarbeitet. Beispielsweise werden die einzelnen Waffelblätter gekühlt, mit einer Creme bestrichen und gestapelt.

Bei der vorliegenden Herstellungsanlage ist nach der Entnahme eine Messvorrichtung 21 angeordnet. Alternativ können zwischen der Messvorrichtung 21 und der Waffelbackmaschine 20 auch noch weitere Stationen wie beispielsweise eine Kühlstation oder andere Messvorrichtungen vorgesehen sein.

Gegebenenfalls ist vorgesehen, dass die Messvorrichtung 21 mit der Steuerung der Waffelbackmaschine 20 verbunden ist. Hierdurch können in der Steuerung der Waffelbackmaschine 20 die Signale der Messvorrichtung 21 verwendet werden, um beispielsweise Optimierungen vorzunehmen.

Bevorzugt ist die Messvorrichtung 21 selbststehend ausgeführt und weist ein Maschinengestell auf, an dem die maßgeblichen Komponenten angebracht sind.

**Figur** 2 zeigt eine schematische Schnittdarstellung einiger Komponenten der Messvorrichtung 21 sowie eine Detailansicht. Die Messvorrichtung 21 ist eine Vorrichtung zur Messung der Dicken von dünnwandigen, spröden Waffelblättern. Die Waffelblätter 22 werden bei der Messung entlang einer Förderrichtung 16 durch einen Messspalt 1 bewegt. In der vorliegenden Darstellung ist lediglich ein einzelnes Waffelblatt 22 dargestellt. Im Regelbetrieb werden die einzelnen Waffelblätter 22 bevorzugt nacheinander, insbesondere beabstandet voneinander, durch den Messspalt 1 bewegt. Zum Transport der Waffelblätter 22 zum Messspalt 1 und zum Abtransport vom Messspalt 1 ist ein erster Waffelblattförderer 2 vorgesehen. Dieser Waffelblattförderer 2 weist eine Förderfläche 3 auf, auf der die Waffelblätter 22 transportiert werden. In der vorliegenden Ausführungsform ist der erste Waffelblattförderer 2 als Riemenförderer ausgebildet, der mehrere zwischen Rollen gespannte Riemen aufweist. Mindestens eine dieser Rollen ist angetrieben, um einen Riemenförderer zu bilden.

Der Messspalt 1 wird in der vorliegenden Ausführungsform maßgeblich durch zwei Komponenten begrenzt bzw. gebildet. Auf der einen Seite wird der Messspalt 1 durch den Messfühler 4 begrenzt. Auf der anderen Seite wird der Messspalt 1 durch einen Gegenhalter 9 begrenzt. In allen Ausführungsformen wird das Waffelblatt 22 während der Messung durch den Messspalt 1 hindurch gefördert und ist dabei bevorzugt mit einer Seite an den Gegenhalter 9 angelegt und wird auf seiner anderen Seite von dem Messfühler 4 abgetastet. Insbesondere umfasst der Messfühler 4 einen Sensor 8, der zur Detektion einer Bewegung des Messfühlers 4 eingerichtet ist. bevorzugt umfasst der Messfühler 4 einen Schwenkarm 7 der um eine Schwenkachse 6 schwenkbar angeordnet ist. Dieser Schwenkarm 7 wirkt in der vorliegenden Ausführungsform als Schlepphebel und dient insbesondere der reibungsarmen Führung des Messfühlers 4. Der Sensor 8 ist zur Detektion einer Bewegung des Schwenkarms 7 eingerichtet. Der Sensor 8 ist in der vorliegenden Ausführungsform ein linear beweglicher Sensor, insbesondere ein pneumatischer Wegsensor, der entfernt von der Schwenkachse 6 mit dem Schwenkarm 7 gekoppelt ist. Bei einer Bewegung des Messfühlers wird der Schwenkarm 7 um die Schwenkachse 6 verschwenkt. Der mit dem Schwenkarm 7 gekoppelte Sensor 8 kann diese Bewegung detektieren. Der zwischen Sensor 8 und Waffelblatt 22 angeordnete Schwenkarm 7 verhindert dabei ein Verkanten des linear wirkenden Sensors 8.

Der Messfühler 4 umfasst eine erste Einlaufschräge 5. In der vorliegenden Ausführungsform ist diese Einlaufschräge 5 durch ein gebogenes Plättchen gebildet. Grundsätzlich kann diese Einlaufschräge 5 jedoch durch ein beliebiges Element gebildet werden. Die Einlaufschräge 5 dient dazu, das Einfahren des Waffelblatts 22 in den Messspalt 1 zu erleichtern und insbesondere zu verhindern, dass die Vorderkante des Waffelblatts 22 beschädigt wird.

Der Gegenhalter 9 dient insbesondere als Referenzfläche der Messung. Ist kein Waffelblatt 22 in dem Messspalt 1 angeordnet, so kann sich der Messfühler 4 gegebenenfalls auf den Gegenhalter 9 absenken und in dieser Stellung eine Dicke von null messen. Der Gegenhalter 9 ist bevorzugt zwischen den Riemen des Riemenförderers angeordnet. Bevorzugt ist der Gegenhalter 9 derart angeordnet, dass er mit der Förderfläche 3 fluchtet oder dass er die Förderfläche 3 Richtung Messfühler 4 überragt. So kann sichergestellt werden, dass das Waffelblatt 22 an dem Gegenhalter 9 anliegt, wenn der Messfühler 4 von oben an das Waffelblatt 22 angelegt ist, um dessen Dicke zu messen.

Der Gegenhalter 9 weist eine zweite Einlaufschräge 10 auf, die dazu geeignet ist, das Einfahren des Waffelblatts 22 in den Messspalt 1 zu erleichtern.

Der Gegenhalter 9 ist bei der Messung starr angeordnet. Zur Einstellung der Vorrichtung kann jedoch die Lage des Gegenhalters 9 verändert werden. Insbesondere kann die Lage des Gegenhalters 9 gegenüber der Förderfläche 3 und/oder gegenüber dem Messfühler 4 verändert werden, um beispielsweise eine Anpassung an eine andere Produktdicke vornehmen zu können. Diese Höhenverstellung des Gegenhalters 9 kann durch herkömmliche Mittel erfolgen.

In der vorliegenden Ausführungsform ist der Gegenhalter 9 auf einem Gegenhalterträger 13 angeordnet. Dieser Gegenhalterträger 13 kann um eine Gegenhalterdrehachse 12 verdreht bzw. verschwenkt werden. Der Gegenhalter 9 ist in der vorliegenden Ausführungsform zwar walzen- oder zylinderförmig ausgeführt, jedoch ist der Gegenhalter 9 exzentrisch am Gegenhalterträger 13 angebracht. Durch eine Verdrehung des Gegenhalterträgers 13 um die Gegenhalterdrehachse 12 wirkt der Gegenhalter 9 dadurch als Nocke, wodurch sich die Lage bzw. der obere Abschluss des Gegenhalters 9 durch eine Drehung des Gegenhalterträgers 13 verändern und insbesondere einstellen lässt. Insbesondere ist die Außenkontur 14 des Gegenhalters 9 exzentrisch bzw. nockenförmig ausgebildet, sodass eine Verschwenkung des Gegenhalterträgers 13 eine Verstellung des Gegenhalters 9 und des Messspalts 1 bewirkt.

Bevorzugt können auf dem Gegenhalterträger 13 mehrere Gegenhalter 9 montiert werden, die durch eine Drehung des Gegenhalterträgers 13 alle gleichzeitig verstellt werden können.

In allen Ausführungsformen ist bevorzugt vorgesehen, dass der Gegenhalterträger 13 und damit auch der Gegenhalter 9 während der Messung unbewegt bleiben, wodurch der Gegenhalter 9 stillsteht und sich bei der Messung nicht um die Gegenhalterdrehachse 12 dreht.

Zur Förderung der Waffelblätter 22 durch den Messspalt 1 ist ein zweiter Waffelblattförderer 11 vorgesehen.

Gegebenenfalls wird das Waffelblatt 22 bei der Messung im Messspalt 1 von der Förderfläche 3 des ersten Waffelblattförderers 2 abgehoben. Gegebenenfalls ist der erste Waffelblattförderer 2 als Riemenförderer ausgebildet, auf dem das Waffelblatt 22 aufliegt. In beiden Fällen kann es vorkommen, dass der erste Waffelblattförderer 2 nicht dazu geeignet ist, das Waffelblatt 22 durch den Messspalt 1 hindurch zu fördern. Zu diesem Zweck ist der zweite Waffelblattförderer 11 vorgesehen. Der zweite Waffelblattförderer 11 umfasst zumindest eine erste Förderwalze 17. In der vorliegenden Ausführungsform umfasst der zweite Waffelblattförderer 11 zusätzlich eine zweite Förderwalze 18. Die Förderwalzen 17, 18 sind auf jener Seite des Messspalts 1 angeordnet, auf der auch der Messfühler 4 positioniert ist. Ein im Messspalt 1 befindliches Waffelblatt 22 liegt einerseits mit einer Seite an den Gegenhalter 9 an. Auf der anderen Seite liegt das Waffelblatt 22 an der mindestens einen Förderwalze 17, 18 des zweiten Waffelblattförderers 11 an. Die mindestens eine Förderwalze 17, 18 ist angetrieben und zieht bzw. schiebt dadurch das Waffelblatt 22 durch den Messspalt 1.

Hierzu wird die mindestens eine Förderwalze 17, 18 auf das Waffelblatt 22 gedrückt, wobei als Widerlager der Gegenhalter 9 und/oder der erste Waffelblattförderer 2 vorgesehen ist. Bevorzugt weist die mindestens eine Förderwalze 17, 18 des zweiten Waffelblattförderers 11 eine weiche bzw. elastisch verformbare Oberfläche auf. Dadurch können die Berührungsfläche zwischen dem Waffelblatt 22 und der Förderwalze 17, 18 und damit auch die übertragbare Förderkraft erhöht werden. Überdies wird durch die weiche bzw. elastische Ausgestaltung eine Beschädigung des Waffelblatts 22 bei der Förderung verhindert.

Fährt ein Waffelblatt 22 in den Messspalt 1 ein, so wird der Messfühler 4 gegebenenfalls ruckartig bewegt. Um ein Überschwingen der Bewegung des Messfühlers 4 weitestgehend zu minimieren, ist in dieser Ausführungsform ein Dämpfer 15 vorgesehen. Der Dämpfer 15 kann beispielsweise als hydraulischer Dämpfer ausgebildet sein, der entfernt von der Schwenkachse 6 mit dem Schwenkarm 7 gekoppelt ist.

**Figur** 3 zeigt eine Aufsicht auf maßgebliche Komponenten einer Vorrichtung zur Dickenmessung von Waffelblättern 22, insbesondere einer Vorrichtung gemäß Figur 2 bzw. Figur 1.

Die mit Bezugszeichen versehenen Komponenten entsprechen bevorzugt den Komponenten aus Figur 2. Figur 3 zeigt eine Ausführungsform, bei der nebeneinander mehrere Messfühler 4, mehrere Gegenhalter 9 und insbesondere auch mehrere Förderwalzen, 17, 18 des zweiten Waffelblattförderers 11 angeordnet sind. Durch eine derartige Anordnung mehrerer Messfühler 4 und Gegenhalter 9 kann eine Dickenmessung des Waffelblatts 22 an mehreren Stellen bzw. in mehreren Bereichen erfolgen.

Die ersten Förderwalzen 17 und die zweiten Förderwalzen 18 sitzen jeweils auf einer Welle. Diese Wellen sind angetrieben, um eine Drehung der Förderwalzen 17, 18 zu bewirken. In der vorliegenden Ausführungsform erfolgt der Antrieb über Antriebsräder 19. Die Antriebsräder 19 werden durch den ersten Waffelblattförderer 2 angetrieben. Insbesondere laufen die Antriebsräder 19 auf einem Riemen des als Riemenförderer ausgebildeten ersten Waffelblattförderers 2. In der vorliegenden Ausführungsform sind die Antriebsräder 19 jeweils als Stufenscheiben ausgebildet. Insbesondere umfassen die Antriebsräder 19 jeweils Abschnitte mit unterschiedlichen Durchmessern. Durch eine Verlagerung der Antriebsräder 19 können die Abschnitte mit unterschiedlichen Durchmessern auf dem Riemen ablaufen, womit die Lagung insbesondere die Höhe der Förderwalzen 17, 18 gegenüber der Förderfläche 3 eingestellt bzw. gewählt werden kann. Die Förderfläche 3 verläuft in der Darstellung der Figur 3 im Wesentlichen in der Bildebene.

Alternativ oder zusätzlich kann vorgesehen sein, dass jener Riemen des ersten Waffelblattförderers 2, auf dem das Antriebsrad 19 abrollt, höhenverstellbar ausgebildet ist, wodurch die Lage des zweiten Waffelblattförderers 11, insbesondere die Lage der ersten Förderwalze 17 und/oder der zweiten Förderwalze 18 gegenüber der Förderfläche 3 durch Wahl der Lage des höhenverstellbaren Riemens bestimmt ist.

**Figur 4** zeigt eine weitere schematische Schnittdarstellung, insbesondere der Ausführungsformen der Figuren 1, 2 und/oder Figur 3. Die mit Bezugszeichen versehenen Komponenten entsprechen bevorzugt den in den vorangegangenen Figuren bezeichneten Komponenten. Die Gegenhalter 9 sitzen bei dieser Ausführungsform allesamt auf einem Gegenhalterträger 13, der um eine Gegenhalterdrehachse 12 schwenkbar ausgebildet ist. Die Außenkontur 14 des Gegenhalters 9 ist exzentrisch zur Gegenhalterdrehachse 12 angeordnet, sodass diese Außenkontur 14 nockenartig wirkt. Dadurch kann der Messspalt 1 eingestellt werden. Das Antriebsrad 19 zum Antrieb des zweiten Waffelblattförderers 11 weist wiederum Abschnitte mit unterschiedlichen Durchmessern auf, womit durch einen axialen Versatz des Antriebsrads 19 insbesondere der Antriebsräder 19 ebenfalls eine Einstellung des Messspalts 1 erfolgen kann.

Die Förderwalzen 17, 18 können in allen Ausführungsformen gegebenenfalls in einem Bereich angeordnet sein, in dem ein Riemen des Riemenantriebs verläuft. Dadurch kann statt dem Gegenhalter 9 gegebenenfalls auch der Riemen des Riemenantriebs als Widerlager wirken.

## Patentansprüche

1. Vorrichtung zur Messung der Dicken von dünnwandigen, spröden Waffelblättern (22), die während der Messung einzeln, beabstandet nacheinander und kontinuierlich durch einen Messspalt (1) befördert werden, umfassend:
- einen ersten Waffelblattförderer (2) mit einer Förderfläche (3), auf der die Waffelblätter (22) zu dem Messspalt (1) transportiert und von dem Messspalt (1) abtransportiert werden, wobei der erste Waffelblattförderer (2) insbesondere als Riemenförderer ausgebildet ist,
- einen zur Dickenmessung beweglich angeordneten Messfühler (4), wobei der Messfühler (4) eine Seite des Messspalts (1) bildet, wobei der Messfühler (4) eine erste Einlaufschräge (5) aufweist und wobei der Messfühler (4) einen um eine Schwenkachse (6) schwenkbar gelagerten Schwenkarm (7) und einen zur Erfassung der Bewegung des Schwenkarms (7) eingerichteten Sensor (8) aufweist,
- einen während der Messung starr angeordneten Gegenhalter (9), wobei der Gegenhalter (9) die andere Seite des Messspalts (1) bildet, wobei der Gegenhalter (9) eine zweite Einlaufschräge (10) aufweist,
- und einen zweiten Waffelblattförderer (11), der das Waffelblatt (22) entlang einer Förderrichtung (16) durch den Messspalt (1) befördert.

2. Vorrichtung nach Anspruch 1, **dadurch gekennzeichnet, dass** der Gegenhalter (9) zur Einstellung des Messspaltes (1), und insbesondere zur Einstellung der Null-Stellung des Messfühlers (4), verstellbar und für die Messung feststellbar ist.

3. Vorrichtung nach Anspruch 1 oder 2, **dadurch gekennzeichnet, dass** der Gegenhalter (9) auf einem um eine Gegenhalterdrehachse (12) dreh- oder schwenkbar gelagerten Gegenhalterträger (13) sitzt, und dass die Außenkontur (14) des Gegenhalters (9) exzentrisch bzw. nockenförmig ausgebildet ist, sodass eine Verschwenkung des Gegenhalterträgers (13) eine Verstellung des Gegenhalters (9) und des Messspaltes (1) bewirkt.

4. Vorrichtung nach einem der Ansprüche 1 bis 3, **dadurch gekennzeichnet, dass** der Sensor (8) ein Wegsensor oder Winkelsensor, insbesondere ein pneumatischer Wegsensor ist, der entfernt von der Schwenkachse (6) mit dem Schwenkarm (7) gekoppelt ist, um eine Bewegung des Schwenkarms (7) und damit die Dicken der Waffelblätter (22) zu erfassen.

5. Vorrichtung nach einem der Ansprüche 1 bis 4, **dadurch gekennzeichnet, dass** ein Dämpfer (15) zur Dämpfung von Schwingungen des Schwenkarms (7) vorgesehen ist, wobei der Dämpfer (15) bevorzugt ein linearer hydraulischer Dämpfer (15) ist, der, zumindest ab einer bestimmten Schwenkstellung, mit dem Schwenkarm (7) in Wirkkontakt steht.

6. Vorrichtung nach einem der Ansprüche 1 bis 5, **dadurch gekennzeichnet, dass** der Schwenkarm (7) entlang der Förderrichtung (16) verläuft und insbesondere als Schlepphebel ausgebildet ist.

7. Vorrichtung nach einem der Ansprüche 1 bis 6, **dadurch gekennzeichnet, dass** der zweite Waffelblattförderer (11) auf jener Seite des Messspalts (1) angeordnet ist, auf der auch der Messfühler (4) angeordnet ist, und dass der Gegenhalter (9) als Gegenhalter (9) für die Andrückkraft des zweiten Waffelblattförderers (11) an dem jeweiligen Waffelblatt (22) wirkt.

8. Vorrichtung nach einem der Ansprüche 1 bis 7, **dadurch gekennzeichnet, dass** der zweite Waffelblattförderer (11) eine erste Förderwalze (17) umfasst, die zur Förderung der Waffelblätter (22) drehbar angetrieben ist.

9. Vorrichtung nach Anspruch 8, **dadurch gekennzeichnet,**
- **dass** der zweite Waffelblattförderer (11) eine **zweite** Förderwalze (18) umfasst, die zur Förderung der Waffelblätter (22) drehbar angetrieben ist,
- **dass** die erste Förderwalze (17) und die zweite Förderwalze (18) entlang der Förderrichtung (16) nacheinander angeordnet sind,
- und insbesondere dass die erste Förderwalze (17) entlang der Förderrichtung (16) vor dem Gegenhalter (9) und die zweite Förderwalze (18) entlang der Förderrichtung (16) nach dem Gegenhalter (9) angeordnet ist.

10. Vorrichtung nach einem der Ansprüche 1 bis 9, **dadurch gekennzeichnet, dass** die Lage des zweiten Waffelblattförderers (11), insbesondere die Lage der ersten Förderwalze (17) und/oder der zweiten Förderwalze (18) gegenüber dem ersten Waffelblattförderer (2) und/oder gegenüber dem Gegenhalter (9) zur Anpassung an die Dicke der zu fördernden Waffelblätter (22) verstellbar ist.

11. Vorrichtung nach einem der Ansprüche 1 bis 10, **dadurch gekennzeichnet, dass** der zweite Waffelblattförderer (11) mindestens ein Antriebsrad (19) umfasst, das zum Antrieb des zweiten Waffelblattförderers (11) mit dem Antrieb des ersten Waffelblattförderers (2) gekoppelt ist, wobei das Antriebsrad (19) bevorzugt an der bewegten Förderfläche (3) des ersten Waffelblattförderers (2), insbesondere an einem Riemen des ersten Waffelblattförderers (2), abrollt.

12. Vorrichtung nach Anspruch 11, **dadurch gekennzeichnet,**
- **dass** das mindestens eine Antriebsrad (19) des zweiten Waffelblattförderers (11) mehrere Abschnitte mit unterschiedlichen Durchmessern umfasst, die zusammen eine Stufenscheibe bilden, wobei die Lage des zweiten Waffelblattförderers (11), insbesondere die Lage der ersten Förderwalze (17) und/oder der zweiten Förderwalze (18) gegenüber dem ersten Waffelblattförderer (2) durch Wahl des mit dem ersten Waffelblattförderers (2) in Kontakt stehenden Abschnitts des Antriebrads (19) bestimmt ist,
- oder dass jener Riemen des ersten Waffelblattförderers (2), auf dem das Antriebsrad (19) abrollt, höhenverstellbar ausgebildet ist, wobei die Lage des zweiten Waffelblattförderers (11), insbesondere die Lage der ersten Förderwalze (17) und/oder der zweiten Förderwalze (18) gegenüber der Förderfläche (3) durch Wahl der Lage des höhenverstellbaren Riemens bestimmt ist,

13. Vorrichtung nach einem der Ansprüche 1 bis 12, **dadurch gekennzeichnet,**
- **dass** nebeneinander, also quer zur Förderrichtung (16), mehrere Messfühler (4) und Gegenhalter (9) vorgesehen sind,
- gegebenenfalls, dass nebeneinander mehrere Förderwalzen (17,18) vorgesehen sind.

14. **Herstellungsanlage** zur Herstellung von dünnwandigen, spröden Waffelblättern (22), mit einer Waffelbackmaschine (20) und einer der Waffelbackmaschine (20) nachgeordneten Messvorrichtung (21) zur Messung der Dicken der in der Waffelbackmaschine (20) gebackenen Waffeln, **dadurch gekennzeichnet, dass** die Messvorrichtung (21) als Vorrichtung nach einem der vorangegangenen Ansprüche ausgebildet ist.

15. Herstellungsanlage nach Anspruch 14, derart ausgestaltet, dass im Regelbetrieb alle in der Waffelbackmaschine (20) hergestellten Waffelblätter (22) der Messvorrichtung (21) zugeführt werden und insbesondere durch den Messspalt (1) gefördert werden.

## Claims

1. A device for measuring the thickness of thin-walled, brittle wafer sheets (22) which are conveyed individually, successively spaced apart and continuously through a measuring gap (1) during measurement, comprising:
- a first wafer sheet conveyor (2) with a conveying surface (3) on which the wafer sheets (22) are transported to the measuring gap (1) and are transported away from the measuring gap (1), the first wafer sheet conveyor (2) being designed in particular as a belt conveyor,
- a measuring sensor (4) movably arranged for thickness measurement, wherein the measuring sensor (4) forms one side of the measuring gap (1), wherein the measuring sensor (4) has a first inlet bevel (5) and wherein the measuring sensor (4) has a swivel arm (7) mounted to swivel about a swivel axis (6) and a sensor (8) arranged to detect the movement of the swivel arm (7),
- a counterholder (9) rigidly arranged during measurement, the counterholder (9) forming the other side of the measuring gap (1), the counterholder (9) having a second inlet bevel (10),
- and a second wafer sheet conveyor (11) which conveys the wafer sheet (22) along a conveying direction (16) through the measuring gap (1).

2. The device according to claim 1, **characterised in that** the counterholder (9) for adjusting the measuring gap (1), and in particular for setting the zero position of the measuring sensor (4), is adjustable as well as lockable for measurement.

3. The device according to claim 1 or 2, **characterised in that** the counterholder (9) rests on a counterholder support (13) which is mounted rotatably or pivotably about a rotational counterholder axis (12), and **in that** the outer contour (14) of the counterholder (9) is eccentric or cam-shaped, so that an adjustment of the counterholder support (13) causes an adjustment of the counterholder (9) and of the measuring gap (1).

4. The device according to one of claims 1 to 3, **characterised in that** the sensor (8) is a travel sensor or angle sensor, in particular a pneumatic travel sensor, which is coupled to the swivel arm (7) at a distance from the swivel axis (6) in order to detect a movement of the swivel arm (7) and thus the thickness of the wafer sheets (22).

5. The device according to one of claims 1 to 4, **characterised in that** a damper (15) is provided for damping vibrations of the swivel arm (7), wherein the damper (15) is preferably a linear hydraulic damper (15) which, at least from a certain swivel position, is in operative contact with the swivel arm (7).

6. The device according to one of the claims 1 to 5, **characterised in that** the swivel arm (7) runs along the conveying direction (16) and is designed in particular as a rocker arm.

7. The device according to one of claims 1 to 6, **characterised in that** the second wafer sheet conveyor (11) is arranged on that side of the measuring gap (1) on which the measuring sensor (4) is also arranged, and **in that** the counterholder (9) acts as a counterholder (9) for the pressing force of the second wafer sheet conveyor (11) on the respective wafer sheet (22).

8. The device according to one of claims 1 to 7, **characterised in that** the second wafer sheet conveyor (11) comprises a first conveying roller (17) which is rotatably driven for conveying the wafer sheets (22).

9. The device according to claim 8, **characterised**
- **in that** the second wafer sheet conveyor (11) comprises a second conveying roller (18) which is rotatably driven for conveying the wafer sheets (22),
- **in that** the first conveying roller (17) and the second conveying roller (18) are arranged successively along the conveying direction (16),
- and in particular in that the first conveying roller (17) is arranged along the conveying direction (16) upstream of the counterholder (9) and the second conveying roller (18) is arranged along the conveying direction (16) downstream of the counterholder (9).

10. The device according to one of claims 1 to 9, **characterised in that** the position of the second wafer sheet conveyor (11), in particular the position of the first conveying roller (17) and/or the second conveying roller (18) is adjustable relative to the first wafer sheet conveyor (2) and/or relative to the counterholder (9) for adaptation to the thickness of the wafer sheets (22) to be conveyed.

11. The device according to one of claims 1 to 10, **characterised in that** the second wafer sheet conveyor (11) comprises at least one driving wheel (19) which is coupled to the drive of the first wafer sheet conveyor (2) for driving the second wafer sheet conveyor (11), wherein the driving wheel (19) preferably rolls on the moving conveying surface (3) of the first wafer sheet conveyor (2), in particular on a belt of the first wafer sheet conveyor (2).

12. The device according to claim 11, **characterised**
- **in that** the at least one driving wheel (19) of the second wafer sheet conveyor (11) comprises a plurality of sections with different diameters which together form a stepped disc, wherein the position of the second wafer sheet conveyor (11), in particular the position of the first conveying roller (17) and/or of the second conveying roller (18) with respect to the first wafer sheet conveyor (2), is determined by selecting the portion of the driving wheel (19) which is in contact with the first wafer sheet conveyor (2),
- or in that said belt of the first wafer sheet conveyor (2), on which the driving wheel (19) rolls, is designed to be adjustable in height, wherein the position of the second wafer sheet conveyor (11), in particular the position of the first conveying roller (17) and/or of the second conveying roller (18) relative to the conveying surface (3), is determined by selecting the position of the height-adjustable belt.

13. The device according to one of claims 1 to 12, **characterised**
- **in that** a plurality of measuring sensors (4) and counterholders (9) are provided alongside one another, i.e. transversely to the conveying direction (16),
- optionally, in that a plurality of conveyor rollers (17, 18) are provided alongside one another.

14. A production line for producing thin-walled, brittle wafer sheets (22), comprising a wafer baking machine (20) and a measuring device (21) arranged downstream of the wafer baking machine (20) for measuring the thickness of the wafers baked in the wafer baking machine (20), **characterised in that** the measuring device (21) is formed as device according to one of the preceding claims.

15. The production line according to claim 14, configured in such a way that, in regular operation, all wafer sheets (22) produced in the wafer baking machine (20) are fed to the measuring device (21) and in particular are conveyed through the measuring gap (1).

## Revendications

1. Dispositif pour mesurer l'épaisseur de feuilles de gaufrette (22) cassantes de faible épaisseur, qui sont convoyées pendant la mesure individuellement, espacées les unes après les autres et en continu à travers une fente de mesure (1), comprenant :
- un premier convoyeur de feuilles de gaufrette (2) avec une surface convoyeuse (3) sur laquelle les feuilles de gaufrette (22) sont convoyées vers la fente de mesure (1) et sont évacuées de la fente de mesure (1), le premier convoyeur de feuilles de gaufrette (2) étant en particulier conçu comme un convoyeur à courroie,
- une sonde de mesure (4) disposée de manière mobile pour la mesure de l'épaisseur, la sonde de mesure (4) formant un côté de la fente de mesure (1), la sonde de mesure (4) présentant un premier chanfrein d'entrée (5) et la sonde de mesure (4) présentant un bras pivotant (7) monté de manière pivotante autour d'un axe de pivotement (6) et un capteur (8) configuré pour détecter le mouvement du bras pivotant (7),
- un contre-support (9) disposé de manière rigide pendant la mesure, le contre-support (9) formant l'autre côté de la fente de mesure (1), le contre-support (9) présentant un deuxième chanfrein d'entrée (10),
- et un deuxième convoyeur de feuilles de gaufrette (11) qui convoie la feuille de gaufrette (22) le long d'une direction de convoyage (16) à travers la fente de mesure (1).

2. Dispositif selon la revendication 1, **caractérisé en ce que** le contre-support (9) est réglable pour le réglage de la fente de mesure (1), et en particulier pour le réglage de la position zéro de la sonde de mesure (4), et peut être fixé pour la mesure.

3. Dispositif selon la revendication 1 ou 2, **caractérisé en ce que** le contre-support (9) repose sur un support de contre-support (13) monté de manière rotative ou pivotante autour d'un axe de rotation (12) du contre-support, et **en ce que** le contour extérieur (14) du contre-support (9) est conçu de manière excentrique ou en forme de came, de sorte qu'un pivotement du support de contre-support (13) provoque un réglage du contre-support (9) et de la fente de mesure (1).

4. Dispositif selon l'une des revendications 1 à 3, **caractérisé en ce que** le capteur (8) est un capteur de déplacement ou un capteur angulaire, en particulier un capteur de déplacement pneumatique, qui est couplé au bras pivotant (7) à distance de l'axe de pivotement (6), afin de détecter un mouvement du bras pivotant (7) et donc l'épaisseur des feuilles de gaufrette (22).

5. Dispositif selon l'une des revendications 1 à 4, **caractérisé en ce qu'**un amortisseur (15) est prévu pour amortir les vibrations du bras pivotant (7), l'amortisseur (15) étant de préférence un amortisseur hydraulique linéaire (15) qui, au moins à partir d'une position de pivotement déterminée, est en contact fonctionnel avec le bras pivotant (7).

6. Dispositif selon l'une des revendications 1 à 5, **caractérisé en ce que** le bras pivotant (7) s'étend le long de la direction de convoyage (16) et est en particulier conçu comme un levier oscillant.

7. Dispositif selon l'une des revendications 1 à 6, **caractérisé en ce que** le deuxième convoyeur de feuilles de gaufrette (11) est disposé du côté de la fente de mesure (1) sur lequel est également disposé la sonde de mesure (4), et **en ce que** le contre-support (9) agit comme contre-support (9) pour la force de pression du deuxième convoyeur de feuilles de gaufrette (11) sur la feuille de gaufrette (22) correspondante.

8. Dispositif selon l'une des revendications 1 à 7, **caractérisé en ce que** le deuxième convoyeur de feuilles de gaufrette (11) comprend un premier rouleau de convoyage (17) qui est entraîné en rotation pour convoyer les feuilles de gaufrette (22).

9. Dispositif selon la revendication 8, **caractérisé**
- **en ce que** le deuxième convoyeur de feuilles de gaufrette (11) comprend un deuxième rouleau de convoyage (18) qui est entraîné en rotation pour convoyer les feuilles de gaufrette (22),
- **en ce que** le premier rouleau de convoyage (17) et le deuxième rouleau de convoyage (18) sont disposés l'un après l'autre le long de la direction de convoyage (16),
- et en particulier en ce que le premier rouleau de convoyage (17) est disposé le long de la direction de convoyage (16) en amont du contre-support (9) et le deuxième rouleau de convoyage (18) est disposé le long de la direction de convoyage (16) en aval du contre-support (9).

10. Dispositif selon l'une des revendications 1 à 9, **caractérisé en ce que** la position du deuxième convoyeur de feuilles de gaufrette (11), en particulier la position du premier rouleau de convoyage (17) et/ou du deuxième rouleau de convoyage (18), est réglable par rapport au premier convoyeur de feuilles de gaufrette (2) et/ou par rapport au contre-support (9) pour s'adapter à l'épaisseur des feuilles de gaufrette (22) à convoyer.

11. Dispositif selon l'une des revendications 1 à 10, **caractérisé en ce que** le deuxième convoyeur de feuilles de gaufrette (11) comprend au moins une roue d'entraînement (19) qui est couplée à l'entraînement du premier convoyeur de feuilles de gaufrette (2) pour entraîner le deuxième convoyeur de feuilles de gaufrette (11), dans lequel la roue d'entraînement (19) roule de préférence sur la surface convoyeuse (3) en mouvement du premier convoyeur de feuilles de gaufrette (2), en particulier sur une courroie du premier convoyeur de feuilles de gaufrette (2).

12. Dispositif selon la revendication 11, **caractérisé**
- **en ce que** l'au moins une roue d'entraînement (19) du deuxième convoyeur de feuilles de gaufrette (11) comprend plusieurs sections de diamètres différents qui forment ensemble une poulie étagée, la position du deuxième convoyeur de feuilles de gaufrette (11), en particulier la position du premier rouleau de convoyage (17) et/ou du deuxième rouleau de convoyage (18) par rapport au premier convoyeur de feuilles de gaufrette (2), étant déterminée par le choix de la section de la roue d'entraînement (19) qui est en contact avec le premier convoyeur de feuilles de gaufrette (2),
- ou en ce que ladite courroie du premier convoyeur de feuilles de gaufrette (2), sur laquelle roule la roue d'entraînement (19), est configurée de manière réglable en hauteur, la position du deuxième convoyeur de feuilles de gaufrette (11), en particulier la position du premier rouleau de convoyage (17) et/ou du deuxième rouleau de convoyage (18) par rapport à la surface convoyeuse (3), étant déterminée par le choix de la position de la courroie réglable en hauteur.

13. Le dispositif selon l'une des revendications 1 à 12, **caractérisé**
- **en ce que** plusieurs sondes de mesure (4) et contre-supports (9) sont prévus les uns à côté des autres, donc transversalement à la direction de convoyage (16),
- éventuellement, en ce que plusieurs rouleaux de convoyage (17, 18) sont prévus les uns à côté des autres.

14. Installation de fabrication pour la fabrication de feuilles de gaufrette (22) cassantes de faible épaisseur, avec une machine de cuisson de gaufrette (20) et un dispositif de mesure (21) disposé en aval de la machine de cuisson de gaufrette (20) pour mesurer l'épaisseur des gaufrettes cuites dans la machine de cuisson de gaufrette (20), **caractérisée en ce que** le dispositif de mesure (21) est conçu comme ledit dispositif selon l'une des revendications précédentes.

15. Installation de fabrication selon la revendication 14, conçue de telle sorte qu'en fonctionnement régulier, toutes les feuilles de gaufrette (22) fabriquées dans la machine de cuisson de gaufrette (20) sont amenées au dispositif de mesure (21) et, en particulier, sont convoyées à travers la fente de mesure (1).
